# EUROPÄISCHE PATENTSCHRIFT

(11) **EP 0 823 861 B1**
(45) Veröffentlichungstag und Bekanntmachung des Hinweises auf die Patenterteilung: **05.01.2000**
(21) Anmeldenummer: 96908988.7
(22) Anmeldetag: 18.04.1996
(51) Int. Cl.: B01D 63/12, B01D 65/00, B01D 61/36, B01D 53/22

(54) **VORRICHTUNG ZUR TRENNUNG VON FLUIDEN**
FLUID SEPARATION DEVICE
DISPOSITIF PERMETTANT DE SEPARER DES FLUIDES

(30) Priorität: 24.04.1995 CH 116595
(43) Veröffentlichungstag der Anmeldung: 18.02.1998
(73) Patentinhaber: KREBS & Co. AG, CH-8022 Zürich (CH)
(72) Erfinder: DANZIGER, René, S., CH-8134 Adliswil (CH)
(74) Vertreter: Patentanwaltsbüro Feldmann AG
(86) Internationale Anmeldenummer: CH9600142
(87) Internationale Veröffentlichungsnummer: WO9633798

(56) Entgegenhaltungen:
- EP-A- 0 062 494
- EP-A- 0 641 593
- US-A- 4 296 951
- US-A- 4 874 405
- US-A- 5 294 345
- US-E- R E33 678
- PATENT ABSTRACTS OF JAPAN vol. 7, no. 191 (C-182), 20.August 1983 & JP,A,58 095523 (KURARAY KK), 7.Juni 1983, & DATABASE WPI Section Ch, Week 8328 Derwent Publications Ltd., London, GB; Class A88, AN 83-708915

## Beschreibung

Die vorliegende Erfindung betrifft eine Vorrichtung zur Trennung von Fluiden, die ein Druckrohr zur Aufnahme von mindestens zwei Wickelmodulen umfasst, gemäss Oberbegriff des Patentanspruches 1.

Die Verwendung von Wickelmodulen mit selektiven Membranen zur Trennung von Fluiden ist bekannt. Zur Separation der Fluide wird je nach Art der Fluide Umkehrosmose, Ultrafiltration, Gaspermeation oder in neuerer Zeit auch Pervaporation eingesetzt. Die der Vorrichtung zugeführten gemischten Fluide werden Feedlösung, die durch die Membran des Wickelmoduls geströmten Fluide werden als Permeat und die restlichen Fluide als Retentat bezeichnet. Allgemein ist der Stofftransport durch die Membran des Wickelmoduls proportional zur treibenden Kraft, das heisst zur Differenz des chemischen Potentials der Fluide auf den zwei Seiten der Membran. Die Potentialdifferenz wird dadurch erreicht, dass am Wickelmodul, welches innerhalb eines Druckrohres angeordnet ist, ein Unter- oder Ueberdruck angelegt wird.

In US-A-3'367'504 wird eine derartige Vorrichtung, bestehend aus einem Druckrohr und einem darin angeordneten Wickelmodul beschrieben, die zur Meerwasser-Entsalzung mittels Umkehrosmose verwendet wird. Zu entsalzendes Wasser wird nach allfälliger Vorbehandlung als Feedlösung in das Druckrohr eingeleitet und verlässt es als gereinigtes, aufbereitetes Wasser in Form eines Permeats. Das hier verwendete Wickelmodul besteht aus einer oder mehreren Membrantaschen, die mit je einem netzähnlichen Abstandhalter (Feedspacer) aus Kunststoff oder Metall spiralförmig um ein Permeatsammelrohr gewickelt sind. Jede Membrantasche besteht dabei aus zwei Membranen, zwischen denen ein poröses Kunststoff- oder Metallgewirk liegt (Permeatspacer). Die Membrantasche ist an drei Seiten geschlossen. An ihrer vierten offenen Seite ist sie an das perforierte Permeatsammelrohr angeschlossen. Die Feedlösung tritt an der Stirnfläche des Wickelmoduls ein und strömt in axialer Richtung durch das Wickelmodul. Dabei dringt die zu trennende Komponente, in diesem Beispiel das Wasser, durch die Membran und strömt als Permeat innerhalb der porösen Stützschicht in radialer Richtung spiralförmig dem Permeatsammelrohr zu. Da die Ausbeute eines einzelnen Wickelmoduls relativ gering ist, werden zum Erreichen der gewünschten Ausbeuten im allgemeinen mehrere Module in Strömungsrichtung hintereinander innerhalb des Druckrohres angeordnet. Dabei bildet das Retentat des vorhergehenden Wickelmoduls jeweils die Feedlösung für das nachfolgende Modul.

In US-A-3'417'870 ist eine weitere Vorrichtung mit einem Wickelmodul offenbart, die zur Meerwasser-Entsalzung verwendet wird. Das Wickelmodul besteht hier aus mehreren Mebrantaschen, die radial zueinander angeordnet und gemeinsam um ein Permeatsammelrohr gewickelt sind. Diese spezielle Anordnung erhöht den Wirkungsgrad. Doch auch hier werden meist mehrere hintereinander angeordnete Module verwendet, um die gewünschte Ausbeute zu erzielen.

Derartige Vorrichtungen mit Wickelmodulen werden unter Verwendung von geeigneten Membranen auch in der Pervaporationstechnik eingesetzt. Ein Flüssigkeitsgemisch wird mittels Permeation aufgetrennt, indem eine permselektive Membran auf einer Seite von dem Flüssigkeitsgemisch überströmt wird. Gewisse Komponenten der Flüssigkeit dringen dabei bevorzugter durch die Membran als andere. Der die Membran durchdringende Anteil, das Permeat, wird in Form von Dampf auf der anderen Seite der Membran weggeführt. Beim Wickelmodul erfolgt dies im Permeatrohr. Die Restflüssigkeit, also der nicht durch die Membran dringende Anteil des Flüssigkeitsgemisches, bildet das Retentat. Die treibende Kraft für den Transport der permeierenden Komponente ist der Partialdruckunterschied zwischen der Feed- und der Permeatseite der Membran. Dieser Druckunterschied kann auf verschiedene Weise erzielt werden. Bei den zur Zeit kommerziell eingesetzten Vorrichtungen wird auf der Permeatseite der Membran ein Vakuum angelegt, wobei das Vakuum bevorzugt durch so starkes Kühlen des Permeats erreicht wird, dass dieses kondensiert.

Alle bekannten Wickelmodule haben jedoch den Nachteil, dass ihr Wirkungsgrad relativ klein ist, so dass mehrere Module in Serie aneinandergereiht werden müssen, wodurch die Vorrichtungen jedoch vergrössert werden.

Es ist zwar bekannt, dass Membrantrennverfahren durch Zufuhr von Wärme verbessert werden können. Der Pervaporationsprozess wird durch die Wärmezufuhr zusätzlich verbessert, weil die durch die Verdampfung auf der Permeatseite verursachte Abkühlung verhindert wird. Dieser Effekt wird bei den Vorrichtungen mit Wickelmodulen ausgenützt, indem die Feedlösung vor dem Zuführen in das Druckrohr beheizt wird. Sind jedoch mehrere Wickelmodule aneinandergereiht, so ist die Wirkung dieser Wärmezufuhr äusserst begrenzt, da die Feedlösung beim Durchbeziehungsweise Ueberströmen der Membrane einem starken Temperaturgradienten unterworfen ist.

Für die Pervaporation werden deshalb anstelle von Wickelmodulen bevorzugterweise Vorrichtungen einer anderen Modul-Konstruktionsart verwendet. Diese weisen einen sandwichartigen Aufbau auf und setzen sich aus Pervaporationskammern und Heizkammern zusammen. Dabei ist jede Pervaporationskammer zwischen zwei Heizkammern angeordnet. Eine derartige Vorrichtung ist aus EP-A-0'572'355 bekannt. Durch die Verwendung der Heizkammern wird eine gleichmässige Temperaturverteilung erzielt, was den Wirkungsgrad erhöht. Durch ihren schichtweisen Aufbau weisen diese Vorrichtungen jedoch eine kleinere Membranoberfläche pro Volumeneinheit auf als die bekannten Vorrichtungen, die Wickelmodule enthalten, so dass ihre aktive Fläche geringer ist. Ein weiterer Nachteil ist, dass sie relativ teuer in der Herstellung sind. Dies ist umso nachteiliger, als die Membran selber eine begrenzte Lebensdauer aufweist und anschliessend ausgewechselt werden muss. Von allen Membranmodulen können Wickelmodule am einfachsten ausgewechselt werden.

Ein wesentlicher Vorteil der Verwendung von Wickelmodulen ist, dass diese kostengünstiger sind, wodurch die Herstellungs- und Betriebskosten von Pervaporations-Vorrichtungen vermindert werden. Es sind deshalb auch Vorrichtungen mit Wickelmodulen bekannt, welche den Wärmeverlust beim Durchströmen der Membrane kompensieren.

So offenbart EP-A-0'641'593 eine Vorrichtung zur Pervaporation, welche ein Druckrohr mit mehreren darin in Serie angeordneten Wickelmodulen und einen externen Wärmetauscher umfasst. Das Retentat, welches das erste Wickelmodul verlässt, wird aus dem Druckrohr in den externen Wärmetauscher geleitet, wo es auf die gewünschte Betriebstemperatur erwärmt wird. Anschliessend wird es als Feedlösung für das nachfolgende Wickelmodul in das Druckrohr zurückgeleitet.

Patent Abstracts of Japan, vol. 7, no. 191 offenbart ferner eine Anordnung von mehreren Wickelmodulen in Serie. Das Retentat eines Wickelmoduls wird jeweils ausserhalb der Wickelmodulvorrichtung erwärmt, bevor es als Feed in das nachfolgende Wickelmodul geleitet wird.

US-A-5'294'345 beschreibt eine Vorrichtung zur Pervaporation mit einem Druckrohr und einem einzigen darin angeordneten Wickelmodul, wobei das Druckrohr einen doppelwandigen, beheizbaren Mantel aufweist. Der Feedeingang ist im in Strömungsrichtung hinteren Bereich des Wickelmoduls angeordnet, damit die Feedlösung über eine möglichst lange Strecke entlang der Wandung des Druckrohres fliesst, um so vor Eintritt in das Wickelmodul auf die gewünschte Temperatur erwärmt zu werden.

Es ist deshalb Aufgabe der Erfindung, eine verbesserte Vorrichtung zur Trennung von Fluiden zu schaffen, welche die obengenannten Nachteile behebt.

Diese Aufgabe löst eine Vorrichtung zur Trennung von Fluiden mit den Merkmalen des Patentanspruches 1.

In der erfindungsgemässen Vorrichtung werden die kostengünstigeren Wickelmodule verwendet, wobei das zu trennende Fluid nicht nur vor dem Eintritt in das Druckrohr und somit in das erste Modul erwärmt wird, sondern auch vor dem Eintritt in jedes weitere Modul. Dadurch wird innerhalb der Vorrichtung eine nahezu konstante Temperatur gewährleistet und somit der Wirkungsgrad erhöht. Die für die Trennung der Fluide benötigte Membranoberfläche wird durch die Erhöhung des Wirkungsgrades verkleinert.

Die Heizvorrichtung beheizt mindestens einen Bereich zwischen zwei hintereinander angeordneten Wickelmodulen, wodurch das Retentat, welches das eine Wickelmodul verlässt, erwärmt wird, bevor es als Feed das nachfolgende Wickelmodul durchströmt. Beim Uebergang von einem Wickelmodul in das nachfolgende Wickelmodul verbleibt das Retentat/der Feed im Druckrohr. Der Uebergangsbereich von einem Wickelmodul zum nächsten ist so ausgebildet, dass das Retentat/der Feed eine turbulente Strömung aufweist. Dank dieser turbulenten Strömung wird ein genügend grosser Wärmeübergang von der Heizvorrichtung zum Retentat/Feed gewährleistet. Bevorzugterweise sind im Uebergangsbereich Mittel zur Erzeugung einer turbulenten Strömung vorhanden, beispielsweise statische Mischer. In anderen Ausführungsformen ist die Reynolds-Zahl, welche proportional von der Strömungsgeschwindigkeit und dem Rohrdurchmesser und indirekt proportional von der kinematischen Zähigkeit abhängt, genügend gross, damit das Fluid eine turbulente Strömung aufweist. Die erfindungsgemässe Vorrichtung zur Trennung von Fluiden ist kompakt gestaltet. Ferner ist nur eine geringe Anzahl von Anschlussleitungen, beispielsweise Retentatausgängen, notwendig.

In den beiliegenden Zeichnungen sind Ausführungsbeispiele des Erfindungsgegenstandes dargestellt, die in der nachfolgenden Beschreibung erläutert sind. Es zeigen
- Figur 1: eine perspektivische Darstellung einer Vorrichtung mit hintereinander angeordneten Wickelmodulen gemäss dem Stand der Technik;
- Figur 2: eine schematische Darstellung einer Ausführungsform der erfindungsgemässen Vorrichtung im Querschnitt und
- Figur 3: eine schematische Darstellung einer zweiten Ausführungsform im Querschnitt.

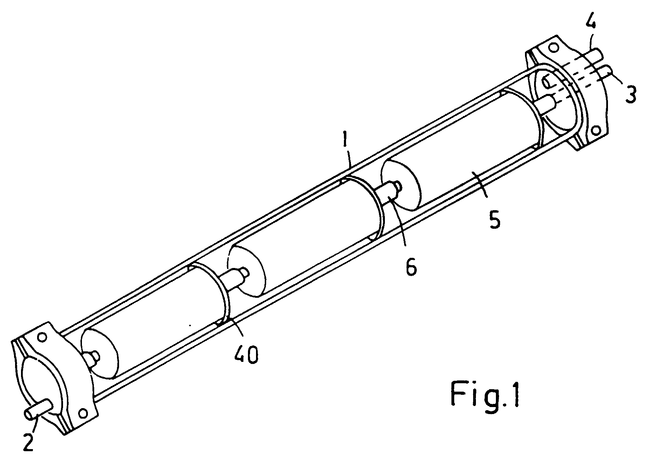

Die erfindungsgemässe Vorrichtung weist prinzipiell einen ähnlichen Aufbau auf wie die bekannten, wärmetauscherlosen Vorrichtungen mit Wickelmodulen, wovon eine Ausführungsform in der Figur 1 dargestellt ist. Diese Ausführungsform wird zur Pervaporation eingesetzt. Die für andere Membrantrennverfahren verwendeten Vorrichtungen weisen jedoch den gleichen prinzipiellen Aufbau auf, im wesentlichen ändert sich nur die Beschaffenheit der verwendeten Membrane und der Transportmechanismus, das heisst die treibenden Kraft für den Massentransport durch die Membran, welche durch das Anlegen eines Ueberdruckes beziehungsweise Unterdruckes erzielt wird.

Die hier dargestellte Vorrichtung umfasst ein Druckrohr 1, das bevorzugterweise aus Metall, Kunststoff oder Glas gefertigt ist. Das Druckrohr 1 weist im allgemeinen einen Eingang und mindestens zwei Ausgänge auf. Der Eingang wird Feedeingang 2 genannt und dient der Zuführung der zu trennenden Fluide, das heisst der Feedlösung. Der eine Ausgang ist der Permeatausgang 3, durch den das durch die Membrane der Wickelmodule permeierte Fluid abgelassen werden kann. Der andere Ausgang ist der Retentatausgang 4 zur Wegführung der nicht durch die Membran gedrungenen Flüssigkeit.

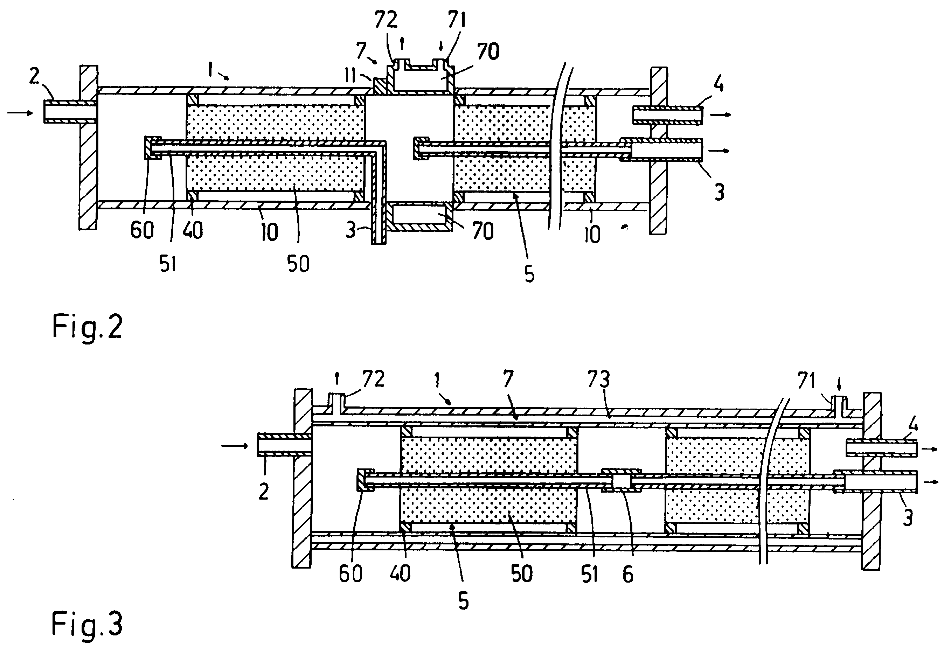

Im Innern des Druckrohres sind mindestens zwei Wickelmodule 5 in Strömungsrichtung hintereinander angeordnet. Jedes Wickelmodul weist eine oder mehrere Membrantaschen 50 auf, die zusammen mit den Feedspacern um ein poröses Permeatsammelrohr 51 gewickelt sind. Die äussere Oberfläche jedes Wickelmoduls ist mittels Retentatdichtungen 40 gegenüber dem Druckrohr 1 abgedichtet, so dass die Feedlösung durch das Wickelmodul fliessen muss. Die in Serie geschalteten Wickelmodule 5 können mittels Kupplungsstücken 6 miteinander verbunden sein, wie dies in der Figur 3 dargestellt ist. Jedes Kupplungsstück 6 verbindet benachbarte Permeatsammelrohre 51, so dass ein durchgehender Kanal bis zum Permeatausgang 3 am Ende des Druckrohres 1 entsteht. Das Permeatsammelrohr des ersten, dem Feedeingang 2 am nächsten gelegenen Wickelmoduls ist an seinem feedeingangsseitigen Ende abgeschlossen, beispielsweise mittels einer Endkappe 60.

In einer anderen Ausführungsform ist erfindungsgemäss an jedem dem Feedeingang abgewandten Ende der Permeatsammelrohre 51 ein Permeatausgang 3 angeordnet und die einzelnen Rohre sind nicht miteinander verbunden. In der Figur 2 ist schematisch dargestellt, dass die einzelnen Rohre innerhalb des Druckrohres nicht miteinander verbunden sind. Jedes dem Feedeingang zugewandte Ende der Permeatsammelrohre 51 ist mittels einer Endkappe 60 oder ähnlichen Mitteln abgeschlossen. Das Druckrohr besteht in dieser Ausführungsform bevorzugterweise aus Rohrabschnitten 10, die mittels Flanschen 11 miteinander verbindbar sind.
Der Vorteil dieser Ausführungsform ist, dass ein besseres Vakuum, das heisst ein tieferer Absolutdruck, innerhalb der einzelnen Permeatsammelrohre erzielt werden kann. Dadurch wird der Stofftransport durch die Membran verbessert.

Es sind auch Varianten möglich, bei denen nach einer bestimmten Anzahl von miteinander verbundenen Wickelmodulen ein Permeatausgang angeordnet ist. Die Wickelmodule 5 sind in jeder Ausführungsform mit bekannten Mitteln im Druckrohr 1 gehalten. Zudem sind im Druckrohr 1 Festhaltemittel, auch ATD oder Anti-Telescoping Devices genannt, angeordnet, die ein Entrollen der aufgewickelten Membran verhindern. Diese Festhaltemittel sind in den Figuren nicht dargestellt.
Die Verwendung von miteinander verbundenen Permeatsammelrohren oder mehreren Permeatausgängen ist unabhängig von der verwendeten Art der Heizvorrichtung.

Die in den Figuren 2 und 3 dargestellte erfindungsgemässe Vorrichtung weist eine Heizvorrichtung 7 auf, die mindestens einen Bereich zwischen den hintereinander angeordneten Wickelmodulen beheizt. In der in Figur 2 dargestellten Ausführungsform umfasst die Heizvorrichtung Heizelemente 70, die jeweils im Bereich zwischen je zwei Wickelmodulen 5 angeordnet sind. Als Heizelemente 70 können elektrische Heizwiderstände verwendet werden, die am äusseren Mantel des Druckrohres 1 angeordnet sind. Ebenso können die Heizelemente Aufsätze sein, die auf dem Druckrohr angeordnet sind und von einem Heizmedium durchflossen sind. Jedes Heizelement weist einen Eingang 71 und einen Ausgang 72 zur Zu- beziehungsweise Abführung des Heizmediums auf. Des weiteren kann das Druckrohr in diesen Bereichen einen doppelwandigen Mantel aufweisen, dessen Zwischenraum von einem Heizmedium durchströmt wird.

In der in Figur 3 dargestellten Ausführungsform ist der gesamte Mantel 73 des Druckrohres 1 doppelwandig ausgeführt, so dass ein oder mehrere Zwischenräume entstehen, die von einem Heizmedium, beispielsweise Wasser, Wasserdampf oder einem Wärmeträgeröl, durchströmt sind. Am feedeingangseitigen Ende des Druckrohres 1 ist ein Eingang 71 und am retentatseitigen Ende ein Ausgang 72 für das Heizmedium angeordnet. Im Innenraum des doppelwandigen Mantels können Umlenkbleche zur Verbesserung der Strömungsführung des Heizmediums angeordnet sein. Der Vorteil dieser Ausführungsform ist, dass sie einfach herstellbar ist, dass sie unabhängig von der Anzahl der verwendeten Wickelmodule ist und dass lediglich zwei Anschlüsse für das Heizmedium benötigt werden.

In einer weiteren, hier nicht dargestellten Ausführungsform besteht die Heizvorrichtung wiederum aus einzelnen Heizelementen, die in Form von Wärmetauschern zwischen den einzelnen Wickelmodulen angeordnet sind und die von dem als Feedlösung weiterverwendeten Retentat durchströmt werden. Bevorzugterweise handelt es sich dabei um Rohrbündel-Wärmeaustauscher Der Vorteil dieser Ausführungsform ist, dass das Retentat nach Verlassen eines vorhergehenden Wickelmoduls über eine grössere Austauschfläche mit dem Heizelement in Kontakt kommt und so ein besserer Wärmeübergang gewährleistet wird, bevor es als Feedlösung das nächste Wickelmodul durchströmt.

Bei beiden letztgenannten Varianten besteht ein weiterer Vorteil darin, dass jeder Uebergang von einem Wickelmodul zum nächsten individuell beheizt werden kann, so dass die Temperatur der Feedlösung entsprechend der Konzentration des permeablen Anteiles in der Lösung gesteuert werden kann.

Um den Wärmeübergang von der Heizvorrichtung auf die Feedlösung vor dem Entritt in das nächste Wickelmodul zu optimieren, sind im Bereich zwischen je zwei Wickelmodulen Mittel zur Erzeugung einer turbulenten Strömung vorhanden, um den Wärmeübergang zu erhöhen. Beispiele hierfür sind statische Mischer mit den verschiedensten geometrischen Formen, welche der Längsströmung des Fluids, beziehungsweise des Retentats, Querströmungen in Abhängigkeit der geometrischen Formen des Mischers überlagern. In einer Ausführungsform sind die Mittel zur Erzeugung von turbulenten Strömungen eine oder mehrere Spiralen, welche am Kupplungsstück, das die zwei Permeatsammelrohre verbindet, angeordnet sind. In einer anderen Ausführungsform ist das Festhaltemittel, das ATD, zwischen zwei Wickelmodulen so gestaltet, dass in der hindurchfliessenden Feedlösung Wirbel erzeugt werden. Ebenso können zwei Festhaltemittel hintereinander angeordnet sein, wobei ihre Durchgangsöffnungen verdreht zueinander angeordnet sind.

Für gewisse Feedlösungen und bestimmte Rohrdurchmesser sind keine speziellen mechanischen Mittel zur Erzeugung von Wirbeln notwendig: allgemein gilt, dass oberhalb der Reynolds-Zahl Re=2'300 eine Rohrströmung turbulent verläuft. Beispielsweise beträgt die Reynolds-Zahl für reines Ethanol in einem Durchfluss von 500 kg/h bei einer Temperatur von 100°C und einem Wickelmodul-Durchmesser von 4" (= 10,16 10⁻² m) 5'400, so dass auf jeden Fall eine turbulente Strömung vorhanden ist.

### Beispiel:

Es wird eine Vorrichtung mit zwei Wickelmodulen verwendet, die jede eine aktive Membranoberfläche von 5 m² aufweist. Die Feedlösung, bestehend aus 10 Gewichtsprozent Wasser und 90 Gewichtsprozent Ethanol, wird mit einem Durchfluss von 500 kg/h zugeführt. Die Zulauftemperatur beträgt 100° C und der Permeatdruck 10 mbar.
Es werden folgende Annahmen getroffen:
1. es permeiert nur reines Wasser;
2. für den betrachteten Bereich wird angenommen, dass sich der transmembrane Fluss proportional zum Molanteil der zu permeierenden Komponente in der Feedlösung verhält (bei konstanter Temperatur auf der Feedseite und konstantem Druck auf der Permeatseite);
3. die Membranpermeabilität verhält sich nach der Arrhenius-Beziehung.

Zwischen den zwei Wickelmodulen wird die nun bereits einen kleineren Wasseranteil aufweisende Feedlösung wiederum auf 100° C erwärmt. Vergleiche mit derselben Vorrichtung ohne Zuführung von Wärme zwischen den Wickelmodulen zeigen, dass der Wirkungsgrad der Permeation durch die Membran bis zu 33% vergrössert wird.

## Patentansprüche

1. Vorrichtung zur Trennung von Fluiden, welche ein Druckrohr (1) zur Aufnahme von mindestens zwei Wickelmodulen (5) umfasst, wobei die mindestens zwei Wickelmodule (5) in Strömungsrichtung hintereinander angeordnet sind, wobei das Druckrohr (1) einen Feedeingang (2), mindestens einen Permeatausgang (3) und einen Retentatausgang (4) aufweist und wobei die Vorrichtung eine Heizvorrichtung (7) umfasst zur Erwärmung einer Feedlösung bei Uebergang von einem Wickelmodul in ein nachfolgend angeordnetes Wickelmodul,
dadurch gekennzeichnet, dass
die Heizvorrichtung so ausgebildet ist, dass mindestens ein von der zu erwärmenden, im Druckrohr verbleibenden Feedlösung beim Uebergang von einem Wickelmodul in das nachfolgend angeordnete Wickelmodul durchströmter Uebergangsbereich des Druckrohres (1) zwischen den mindestens zwei hintereinander angeordneten Wickelmodulen (5) beheizt wird,
und dass der Uebergangsbereich so ausgebildet ist, dass die zu erwärmende Feedlösung eine turbulente Strömung aufweist.

2. Vorrichtung nach Anspruch 1, dadurch gekennzeichnet, dass die Heizvorrichtung (7) mittels einem sie durchströmenden Heizmedium heizbar ist.

3. Vorrichtung nach Anspruch 2, dadurch gekennzeichnet, dass das Druckrohr (1) einen doppelwandigen Mantel zur Aufnahme des Heizmediums in dessen Zwischenraum aufweist.

4. Vorrichtung nach einem der Ansprüche 1 oder 2, dadurch gekennzeichnet, dass die Heizvorrichtung (7) Heizelemente (70) umfasst, die jeweils im Bereich zwischen zwei Wickelmodulen angeordnet sind.

5. Vorrichtung nach Anspruch 4, dadurch gekennzeichnet, dass im Bereich zwischen den Wickelmodulen (5) Mittel zur Erzeugung einer turbulenten Strömung vorhanden sind.

6. Vorrichtung nach Anspruch 1, dadurch gekennzeichnet, dass zu jedem aufzunehmenden Wickelmodul (5) ein Permeatausgang (3) vorhanden ist.

7. Vorrichtung nach den Ansprüchen 2 und 4, dadurch gekennzeichnet, dass jedes Heizelement aus einem Wärmetauscher besteht, der innerhalb des Druckrohres angeordnet ist und sich bei aufgenommenen Wickelmodulen zwischen denselben befindet.

8. Verwendung der Vorrichtung nach einem der Ansprüche 1 bis 7 mit darin aufgenommenen Wickelmodulen zur Pervaporation von Fluiden.

9. Verwendung der Vorrichtung nach einem der Ansprüche 1 bis 7 mit darin aufgenommenen Wickelmodulen zur Gaspermeation.

## Claims

1. A device for the separation of fluids, comprising a pressure pipe (1) for receiving at least two wound modules (5), wherein the at least two wound modules (5) are to be arranged behind each other in the flow direction, wherein the pressure pipe (1) has one feed inlet (2), at least one permeate outlet (3) and a retentate outlet (4), and wherein the device includes a heating device (7) for heating a feed solution during the transition from one wound module to a subsequently arranged wound module,
characterized in that
the heating device is formed in a way that at least one transition area of the pressure pipe (1), through which the feed solution to be heated which remains in the pressure pipe flows during the transition from one wound module to the subsequent wound module, is heated,
and that the transition area is designed in such a way that the feed solution to be heated has a turbulent flow.

2. The device in accordance with claim 1, characterized in that the heating device (7) can be heated by means of a heating medium flowing through it.

3. The device in accordance with claim 2, characterized in that the pressure pipe (1) has a double-walled casing for receiving the heating medium in the space between the walls.

4. The device in accordance with one of claims 1 or 2 characterized in that the heating device (7) comprises heating elements (70) which are respectively arranged in the area between two wound modules.

5. The device in accordance with claim 4, characterized in that means for generating a turbulent flow are provided in the area between the wound modules (5).

6. The device in accordance with claim 1, characterized in that a permeate outlet (3) is provided for each wound module (5) to be installed.

7. The device in accordance with claims 2 and 4, characterized in that each heating element consists of a heat exchanger disposed inside the pressure pipe and located between the wound modules when they are installed.

8. Use of the device according to one of the claims 1 to 7 with wound modules installed therein for the pervaporation of fluids.

9. Use of the device according to one of the claims 1 to 7 with wound modules installed therein for gas permeation.

## Revendications

1. Dispositif pour la séparation de fluides, qui comporte un tube sous pression (1) servant à recevoir au moins deux modules enroulés (5), dans lequel les deux modules enroulés (5) au moins présents sont disposés l'un derrière l'autre dans la direction de l'écoulement et le tube sous pression (1) présente une entrée d'alimentation (2) et au moins une sortie (3) de perméat et une sortie (4) de rétentat, le dispositif comportant un dispositif de chauffage (7) servant à réchauffer une solution d'alimentation lors de son passage d'un module enroulé jusque dans un module enroulé disposé à la suite du premier,
caractérisé en ce que
le dispositif de chauffage est configuré de telle sorte qu'au moins une zone de passage du tube sous pression (1) située entre les deux modules enroulés (5) disposés l'un derrière l'autre au moins présents et traversée par la solution d'alimentation à réchauffer présente dans le tube sous pression lors de son passage d'un module enroulé jusque dans le module enroulé disposé à la suite, est chauffée;
et en ce que la zone de passage est configurée de telle sorte que la solution d'alimentation à réchauffer présente un écoulement turbulent.

2. Dispositif selon la revendication 1, caractérisé en ce que le dispositif de chauffage (7) peut être chauffé au moyen d'un fluide de chauffage qui le traverse.

3. Dispositif selon la revendication 2, caractérisé en ce que le tube sous pression (1) présente une enveloppe à double paroi pour la réception du fluide de chauffage dans son espace intermédiaire.

4. Dispositif selon l'une des revendications 1 ou 2, caractérisé en ce que le dispositif de chauffage (7) contient des éléments chauffants (70) qui sont tous disposés dans la zone située entre deux modules enroulés.

5. Dispositif selon la revendication 4, caractérisé en ce que des moyens pour créer un écoulement turbulent sont prévus dans la zone située entre les modules enroulés (5).

6. Dispositif selon la revendication 1, caractérisé en ce que pour chaque module enroulé (5) à recevoir, il existe une sortie (3) de perméat.

7. Dispositif selon les revendications 2 et 4, caractérisé en ce que chaque élément chauffant est constitué d'un échangeur de chaleur qui est disposé à l'intérieur du tube sous pression et qui est situé entre les modules enroulés lorsque ces derniers sont repris.

8. Utilisation du dispositif selon l'une des revendications 1 à 7, avec les modules enroulés qui y sont repris, pour la pervaporation de fluides.

9. Utilisation du dispositif selon l'une des revendications 1 à 7, avec les modules enroulés qui y sont repris, pour la perméation de gaz.
